# FASCICULE DE BREVET EUROPEEN

(11) **EP 0 995 648 B1**
(45) Date de publication et mention de la délivrance du brevet: **23.04.2003**
(21) Numéro de dépôt: 99117460.8
(22) Date de dépôt: 09.09.1999
(51) Int. Cl.: B60R 25/02

(54) **Antivol de colonne de direction comportant des moyens perfectionnés de blocage du pêne**
Lenksäulen-Diebstahlsicherung mit Mitteln zur Bolzenverriegelung
Anti-theft device for steering column with means for blocking the bolt

(30) Priorité: 23.10.1998 FR 9813411
(43) Date de publication de la demande: 26.04.2000
(73) Titulaire: Antivols Simplex, 21850 Saint Apollinaire (FR)
(72) Inventeur: Touratier, Thierry, 21000 Dijon (FR)
(74) Mandataire: Lemaire, Marc

(56) Documents cités:
- FR-A- 2 615 892
- FR-A- 2 679 504
- US-A- 4 773 241

## Description

L'invention concerne un antivol de colonne de direction comportant des moyens perfectionnés de blocage du pêne.

L'invention se rapporte plus particulièrement à un antivol de colonne de direction du type comportant une première partie dans laquelle un pêne est monté coulissant longitudinalement entre une position avant sortie dans laquelle il est destiné à immobiliser en rotation une colonne de direction et une position arrière rentrée, du type comportant une seconde partie renfermant un élément de commande des déplacements du pêne entre ses positions avant et arrière, et du type dans lequel il est prévu des moyens pour immobiliser le pêne lorsque les deux parties de l'antivol sont séparées l'une de l'autre qui comportent un doigt de blocage qui est monté coulissant transversalement dans la première partie de l'antivol, qui est sollicité élastiquement vers une position avancée de blocage dans laquelle son extrémité libre est susceptible d'être reçue dans l'une ou l'autre de deux encoches arrière et avant formées dans le pêne pour bloquer ce dernier dans l'une ou l'autre de ses positions avant sortie ou arrière rentrée respectivement, et qui, tant que les deux parties de l'antivol ne sont pas séparées, est retenu, dans une position reculée escamotée, par un moyen de retenue qui coopère avec la seconde partie de l'antivol,

Un tel dispositif comportant les caractéristiques du préambule de la revendication 1, est par exemple décrit dans la demande de brevet français FR-A- 2 777 521.

Dans le mode de réalisation proposé dans ce document, les deux encoches avant et arrière sont deux encoches de blocage dont chacune est délimitée par des faces avant et arrière transversales parallèles et dont la largeur permet à l'extrémité libre du doigt de blocage d'y pénétrer transversalement lorsque l'organe de retenue est libéré.

Une situation dans laquelle il est intéressant de bloquer le pêne d'un antivol est en cas d'une tentative de vol du véhicule. Dans ce cas, on est dans une situation dans laquelle l'antivol est dans son état verrouillé dans lequel le pêne est en position avant sortie pour immobiliser la colonne de direction. Il arrive alors parfois que le voleur cherche à rompre la partie du boîtier qui comporte les moyens de commande des déplacements du pêne pour pouvoir accéder directement au pêne et l'amener manuellement vers sa position arrière rentrée. Aussi est il alors intéressant de prévoir des moyens de blocage du pêne qui immobilisent celui-ci dans sa position avant sortie.

Toutefois, il faut que cette immobilisation puisse se faire quelle que soit la position réelle du pêne par rapport au boîtier.

On sait notamment que l'arbre de colonne est généralement pourvu d'une série de rainures d'orientation axiale qui sont réparties régulièrement autour de l'axe de la colonne, et qui sont destinées à recevoir l'extrémité libre avant du pêne de manière à définir plusieurs positions angulaires d'immobilisation de l'arbre de colonne, et donc du volant de direction.

Il est ainsi possible que, au moment de l'enclenchement de l'antivol, le pêne ne soit pas en regard d'une de ces rainures, mais au contraire en regard d'une surface périphérique de l'arbre de colonne située entre deux rainures consécutives. Dans ce cas, lorsque le pêne est libéré par ses moyens de commande pour être déplacé vers sa position avant sortie d'antivol, son extrémité libre avant vient au contact de la surface périphérique de l'arbre, sans atteindre réellement la position antivol.

Dans un tel cas, le doigt de blocage peut ne pas être en regard de l'encoche arrière en rendant alors impossible l'immobilisation du pêne en position avant sortie.

Il est donc souhaitable que le moyen de blocage du pêne permette une immobilisation de celui-ci indépendamment du fait que le pêne soit effectivement reçu dans une rainure ou au contraire en appui contre la surface périphérique de l'arbre.

Par ailleurs, on s'est aperçu que, du fait des tolérances de fabrication et de montage, il pouvait y avoir une grande dispersion quant au positionnement relatif du boîtier de l'antivol par rapport à l'arbre de colonne. Dans certains cas, l'incertitude peut être supérieure à la dimension radiale de la rainure. Aussi, dans ces conditions, on peut aboutir à une situation dans laquelle le pêne serait effectivement immobilisé par le doigt de blocage, mais dans une position inefficace dans laquelle il ne coopérerait pas avec l'arbre de colonne.

Ainsi, le blocage du pêne doit se faire dans une position relativement précise par rapport à la première partie du boîtier, avec le risque évoqué plus haut que cette immobilisation ne soit pas assurée ou qu'elle le soit dans une position inefficace du pêne.

L'invention a donc pour but de proposer une nouvelle conception d'un antivol de colonne de direction dans lequel les moyens de blocage du pêne en cas de rupture du boîtier d'antivol assurent un blocage du pêne indépendamment de la précision de la position relative du pêne par rapport au boîtier et par rapport à l'arbre de colonne.

Dans ce but, l'invention propose un antivol de colonne de direction,
- du type comportant une première partie dans laquelle un pêne est monté coulissant longitudinalement entre une position avant sortie dans laquelle il est destiné à immobiliser en rotation un arbre de colonne de direction et une position arrière rentrée,
- du type comportant une seconde partie renfermant un élément de commande des déplacements du pêne entre ses positions avant et arrière,
- et du type dans lequel il est prévu des moyens pour immobiliser le pêne lorsque les deux parties de l'antivol sont séparées l'une de l'autre qui comportent un doigt de blocage qui est monté coulissant dans la première partie de l'antivol, qui est sollicité élastiquement vers une position avancée de blocage dans laquelle son extrémité libre est susceptible d'être reçue dans l'une ou l'autre de deux encoches arrière et avant formées dans le pêne pour immobiliser ce dernier dans l'une ou l'autre de ses positions avant sortie ou arrière rentrée respectivement, et qui, tant que les deux parties de l'antivol ne sont pas séparées, est retenu, dans une position reculée escamotée, par un moyen de retenue qui coopère avec la seconde partie de l'antivol, caractérisé en ce que l'encoche arrière du pêne est délimitée vers l'avant par une face de butée qui est inclinée par rapport à l'axe longitudinal de coulissement du pêne et avec laquelle coopère l'extrémité libre du doigt de blocage, lorsque ce dernier est en position avancée de blocage, pour immobiliser longitudinalement le pêne vers l'arrière quelle que soit la position longitudinale du pêne en position avant sortie par rapport à la première partie de l'antivol.

Selon d'autres caractéristiques de l'invention
- le doigt de blocage est monté coulissant transversalement selon une direction perpendiculaire à la trajectoire longitudinale du pêne ;
- les deux parties de l'antivol comportent un boîtier commun réalisé en une seule pièce dans lequel les deux parties sont délimitées l'une de l'autre par une ligne d'amorce de rupture ;
- le moyen de retenue est une tige qui est montée coulissante dans la première partie de l'antivol, dont une extrémité coopère avec la seconde partie de l'antivol et dont l'autre extrémité coopère avec le doigt de blocage pour le retenir en position reculée escamotée ;
- le moyen de retenue est un levier qui est monté basculant par rapport à la première partie de l'antivol, dont une extrémité coopère avec la secondé partie de l'antivol et dont l'autre extrémité coopère avec le doigt de blocage pour le retenir en position reculée escamotée.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective éclatée et à grande échelle de certains des composants appartenant à un antivol de direction conforme à un premier mode de réalisation de l'invention ;
- la figure 2 est une vue en section partielle par un plan longitudinal et horizontal passant par la ligne 2-2 de la figure 1 qui illustre les composants de l'antivol selon le premier mode de réalisation et sur laquelle le pêne est illustré en position arrière rentrée, le doigt de blocage en position reculée escamotée et les deux parties du boîtier de l'antivol solidaires l'une de l'autre ;
- la figure 3 est une vue similaire à celle de la figure 2 sur laquelle le pêne est illustré en position arrière rentrée, le doigt de blocage en position avancée de blocage, et les deux parties du boîtier séparées après rupture partielle
- les figures 4 et 6 sont des vues similaires à celles des figures 2 et 3 sur lesquelles le pêne est illustré en position avant sortie ;
- les figures 5 et 7 sont des vues en section transversale selon les lignes 5-5 et 7-7 des figures 4 et 6 respectivement ;
- la figure 8 est une vue, en section selon la ligne 8-8 de la figure 9, qui illustre un deuxième mode de réalisation d'un antivol conforme aux enseignements de l'invention et sur laquelle le pêne est illustré en position avant sortie, le doigt de blocage en position reculée escamotée et les deux parties du boîtier solidaires l'une de l'autre ;
- la figure 9 est une vue en section partielle selon la ligne 9-9 de la figure 8 ;
- la figure 10 est une vue en section partielle selon la ligne 10-10 de la figure 8 ;
- la figure 11 est une vue schématique illustrant en perspective la coopération du doigt de blocage avec ces moyens de retenue constitués par un levier basculant ; et
- les figures 12 à 14 sont des vues similaires aux figures 8 à 10 sur lesquelles le pêne est illustré en position avant sortie, le doigt de blocage en position avancée de blocage et les deux parties du boîtier séparées après rupture partielle.

Dans la description qui va suivre, des composants identiques, similaires ou analogues seront désignés par les mêmes chiffres de référence.

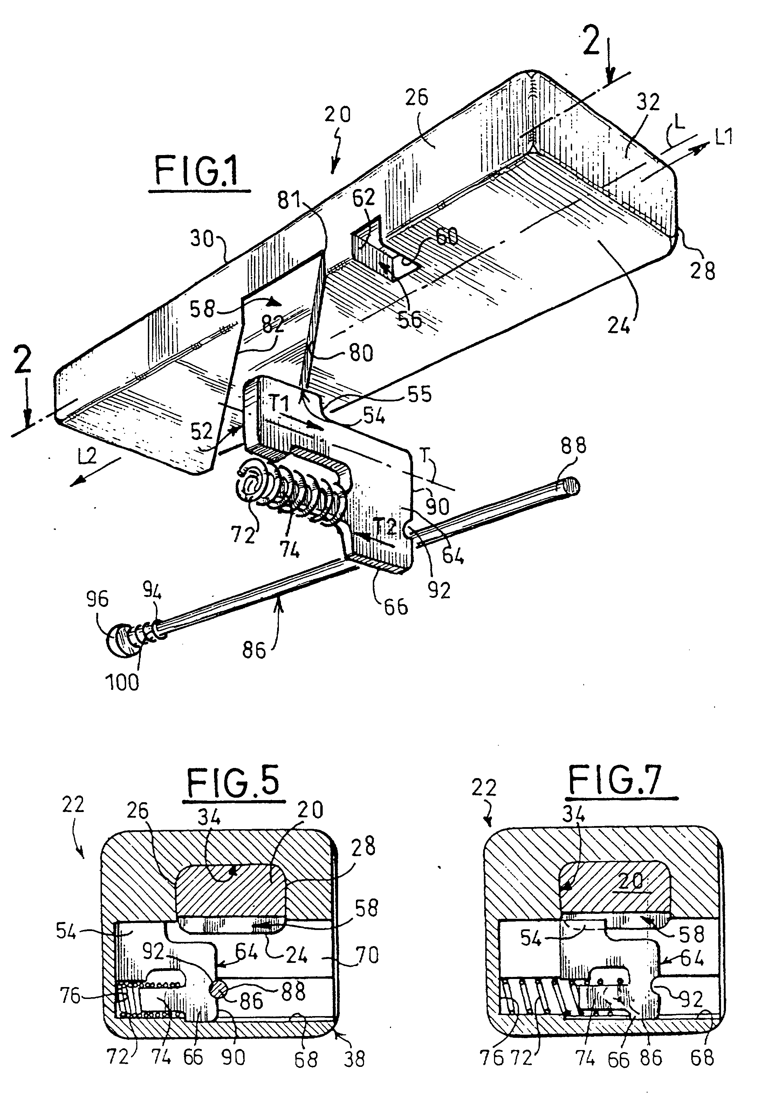

Les termes "horizontal", "vertical", "supérieur", "inférieur", etc. seront utilisés en référence aux figures et notamment à la figure 1 pour faciliter la rédaction de la description et des revendications, mais ceci à titre nullement limitatif.

On a représenté à la figure 1 un pêne 20 appartenant à un mécanisme d'antivol 22 qui est une pièce massive de forme allongée et de section rectangulaire.

Le pêne 20 est notamment délimité par une face inférieure plane et horizontale 24 et par deux faces latérales verticales parallèles et opposées d'orientation longitudinale 26 et 28.

Le corps du pêne 20 est aussi délimité par une face supérieure horizontale 30 parallèle à sa face inférieure 24.

Le pêne 20 est délimité longitudinalement vers l'avant, c'est-à-dire vers la droite en considérant la figure 1, par une face transversale d'extrémité avant 32.

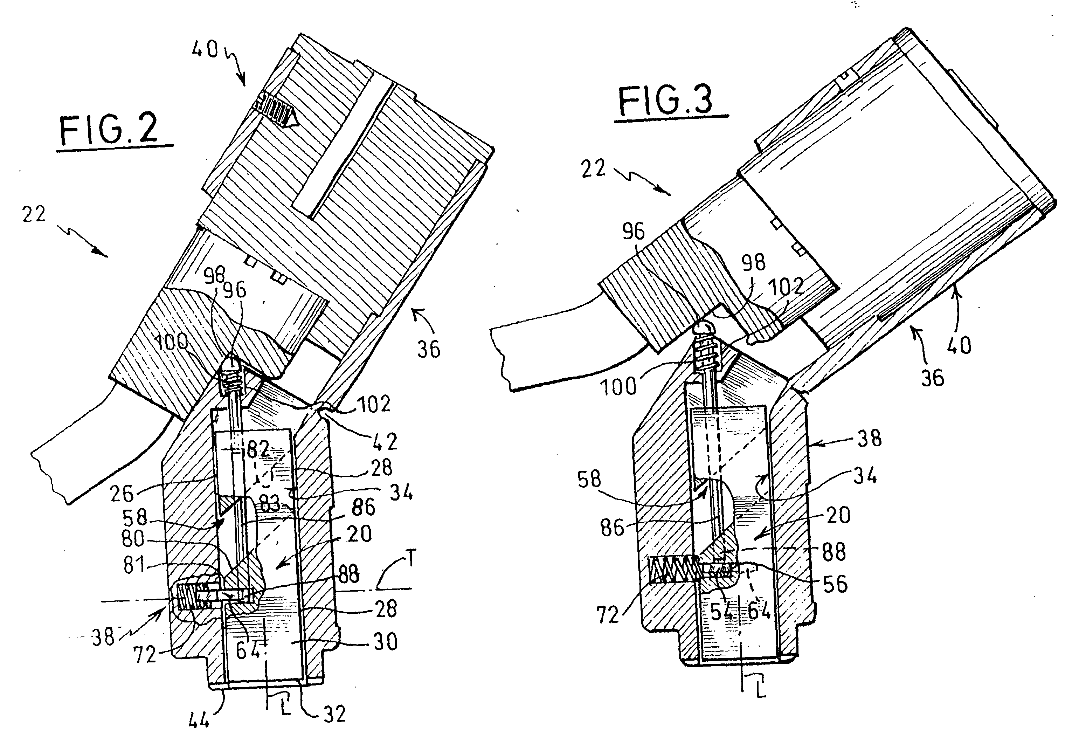

Comme on peut le voir notamment aux figures 2 à 7, le pêne parallélépipédique rectangle 20 est guidé en coulissement selon sa direction longitudinale L dans un canal complémentaire 34 de l'antivol 22.

Plus précisément, l'antivol 22 comporte ici un boîtier métallique en alliage moulé 36 comportant une première partie 38 dans laquelle est formé le canal 34 de guidage du pêne 20 et une seconde partie 40 qui comporte différents composants connus parmi lesquels au moins un élément de commande (non représenté en détail) des déplacements du pêne 20 selon la direction longitudinale L et dans les deux sens L1 et L2.

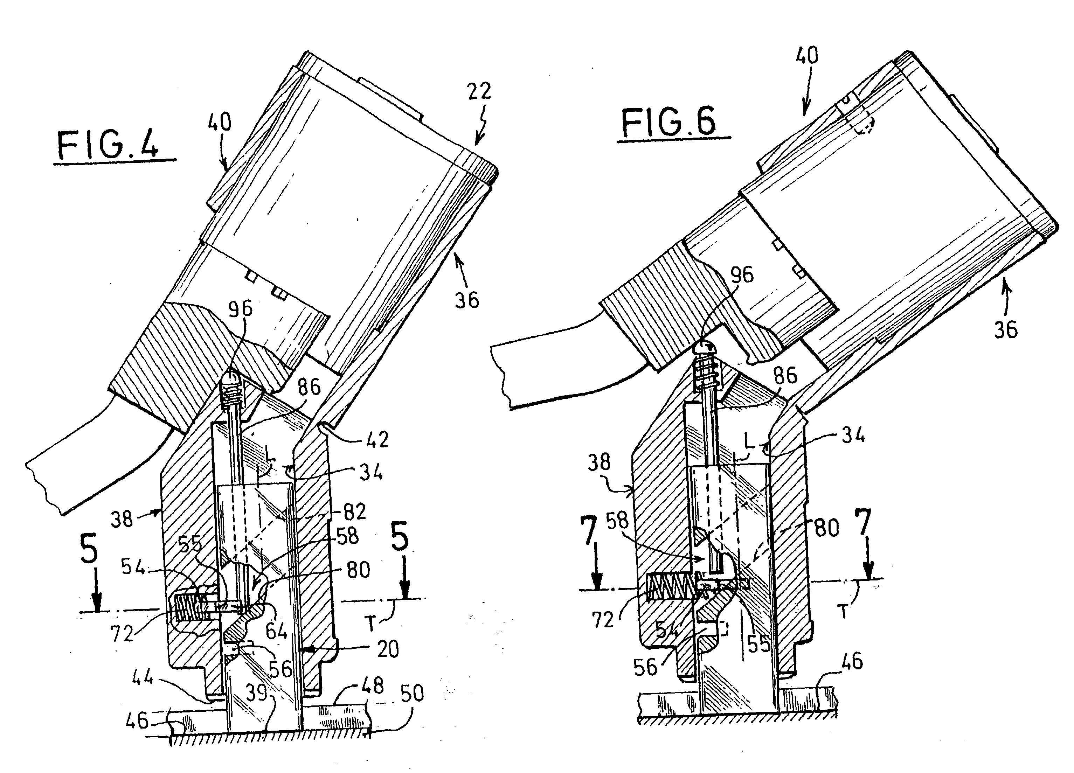

Les deux parties 38 et 40 du boîtier 36 sont ici, à titre d'exemple, réalisées venues de matière en une seule pièce et elles sont reliées entre elles par une partie amincie 42 constituant une amorce de rupture qui, en cas de choc, permet de séparer partiellement ou totalement les deux parties 38 et 40 l'une de l'autre, comme cela est illustré notamment à la figure 3, pour éviter notamment que la seconde partie 40 constitue un obstacle dans l'habitacle susceptible de blesser le conducteur ou le passager avant en cas d'accident.

Selon une technique connue, le pêne 20 est susceptible d'occuper une position arrière rentrée à l'intérieur de l'antivol 22, et plus particulièrement à l'intérieur de la première partie 38 du boîtier 36, dans laquelle sa face transversale d'extrémité libre avant 32 est située en arrière de la face transversale d'extrémité avant 44 de la première partie 38.

A partir de cette position arrière rentrée, les moyens de commande peuvent provoquer un déplacement longitudinal, dans le sens L1 du pêne 20, vers sa position avant sortie dans laquelle son tronçon d'extrémité libre avant fait saillie longitudinalement hors de la première partie 38 du boîtier 36 pour être reçu, comme cela est illustré à la figure 4, dans une rainure axiale 46 formée dans la paroi cylindrique périphérique 48 d'un arbre de direction 50 dont l'axe de rotation est orthogonal à la direction longitudinale L de déplacement du pêne 20.

Selon un agencement connu, il est prévu des moyens 52 pour immobiliser le pêne 20 lorsque les deux parties 38 et 40 de l'antivol 22 sont séparées l'une de l'autre, notamment en cas de rupture lorsque la partie amincie 42 permet un déplacement relatif, voire une séparation, de la seconde partie 40 par rapport à la première partie 38.

Les moyens 52 comportent un doigt de blocage 54 qui est susceptible d'être reçu dans une encoche avant 56 ou dans une encoche arrière 58 formées dans le pêne 20 pour immobiliser ce dernier dans sa position arrière rentrée ou dans sa position avant sortie respectivement.

Selon une conception connue, l'encoche avant 56 est une encoche débouchante dans la face inférieure 24 et la face latérale 26 qui est délimitée longitudinalement par deux faces transversales avant 60 et arrière 62 parallèles entre elles et perpendiculaires à l'axe longitudinal L de déplacement du pêne 20.

Le doigt de blocage 54 est constitué par la partie supérieure d'une plaquette de blocage 64 qui est montée coulissante selon une direction transversale T, dans les deux sens T1 et T2, dans la première partie 38 du boîtier 36.

A cet effet, la partie inférieure en forme de talon 66 de la plaquette de blocage 64 est guidée en coulissement dans une rainure complémentaire 68 formée à cet effet dans la partie inférieure d'un logement 70 de la première partie 38 du boîtier 36.

La plaquette de blocage 64, et donc le doigt de blocage 54, sont sollicités élastiquement en permanence, dans le sens T1, vers une position avancée de blocage par un ressort hélicoïdal de compression 72 qui est guidé sur une patte transversale 74 de la plaquette 64 et dont l'extrémité libre de gauche, en considérant les figures 2 à 7, prend appui contre une surface en vis-à-vis 76 du logement 70.

Afin de retenir la plaquette de blocage 64, et donc le doigt de blocage 54, dans sa position reculée à l'encontre de l'effort appliqué par le ressort 72, il est prévu une tige longitudinale 86 de retenue.

Selon une conception connue, l'encoche arrière 58 formée dans le pêne 20 débouche verticalement dans la face inférieure 24 et transversalement dans la face latérale 26 pour permettre au doigt de blocage 54 d'y pénétrer en vue de retenir le pêne 20 dans sa position avant sortie.

L'encoche arrière 58 est délimitée longitudinalement par une face avant 80 et par une face arrière 82 qui sont ici parallèles.

Conformément aux enseignements de l'invention, la face avant 80 de l'encoche arrière 58 du pêne 20, formant face de butée pour le doigt de blocage 54, est inclinée d'avant en arrière par rapport à l'axe de coulissement L, c'est-à-dire que son point d'intersection 81 avec la face latérale 26 est situé longitudinalement vers l'avant par rapport à son point 83 d'intersection avec la face latérale 28 (voir notamment figure 2).

La tige de retenue 86 est parallèle à la direction de coulissement du pêne 20 et elle est guidée en coulissement dans la première partie 38.

Lorsque le boîtier 36 est intact, c'est-à-dire lorsque les deux parties 38 et 40 de celui-ci n'ont pas été séparées l'une de l'autre, le tronçon d'extrémité libre avant 88 de la tige de retenue 86 s'étend en regard du bord transversal intérieur 90 de la plaquette de blocage 64 qui comporte une encoche complémentaire 92.

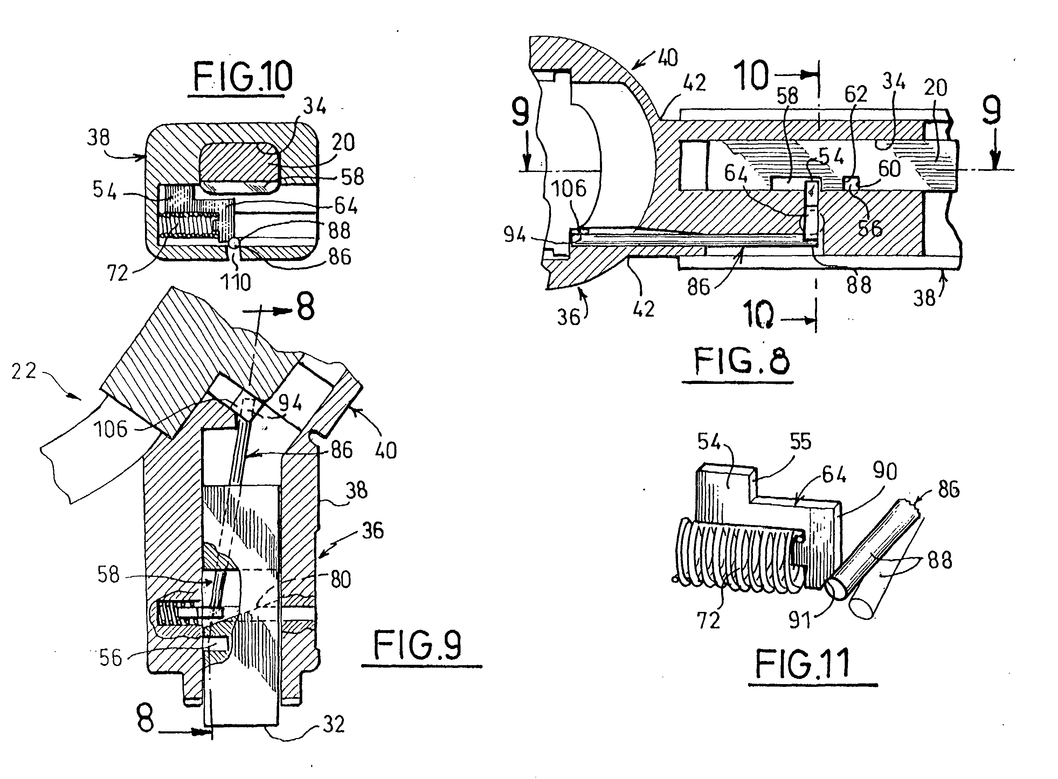

Ainsi, comme on peut le voir plus particulièrement à la figure 5, le tronçon d'extrémité libre avant 88 de la tige de retenue 86 retient transversalement la plaquette de blocage 64 en position reculée escamotée à l'encontre de l'effort qui lui est appliqué par le ressort 72.

Dans cette position escamotée reculée, le doigt de blocage 54 est en retrait transversalement par rapport à la face latérale 26 du pêne 20, c'est-à-dire qu'il n'est reçu dans aucune des encoches avant 56 ou arrière 58, le pêne étant libre de coulisser dans son canal 34 sous l'action de moyens de commande prévus à cet effet.

Le tronçon d'extrémité longitudinale arrière 94 de la tige de retenue 86 comporte une tête arrondie hémisphérique 96 qui coopère avec le fond d'un logement à angle droit 98 formé en vis-à-vis dans la seconde partie 40 du boîtier 36.

Le tronçon d'extrémité longitudinale arrière 94 porte aussi un ressort hélicoïdal de compression 100 qui prend appui dans le fond d'un logement 102 de la première partie 38 du boîtier pour solliciter en permanence la tige de retenue 86 longitudinalement vers l'arrière, c'est-à-dire de bas en haut en considérant les figures 2 et 3, avec sa tête arrondie 96 en appui dans le logement 98.

Lorsque le boîtier 36 est intègre, le tronçon d'extrémité longitudinale avant 88 s'étend au droit de l'encoche 92 tandis que, comme on peut le voir par exemple à la figure 3, la séparation totale ou partielle des deux parties 38 et 40 du boîtier 36 provoque le recul relatif longitudinalement vers l'arrière, c'est-à-dire vers le haut en considérant la figure 3, de la tige 86 de manière que son tronçon d'extrémité libre avant 88 recule pour libérer transversalement, dans le sens T2, la plaquette 64 et le doigt de blocage 54.

On décrira maintenant le fonctionnement de l'antivol et notamment des moyens de blocage du pêne 20 en référence aux figures 1 à 7.

En comparant les figures 2 et 3, on voit que la séparation partielle de la seconde partie 40 par rapport à la première partie 38 provoque le recul de la tige 86 et la libération de la plaquette de blocage 64 de manière que le doigt de blocage 54 pénètre transversalement dans le sens T1 dans l'encoche avant 56 de blocage du pêne 20 en position arrière rentrée, celui-ci étant ainsi immobilisé longitudinalement selon la direction L comme on peut le voir à la figure 3.

Dans la position illustrée aux figures 4 et 5, on voit que le pêne 20 est en position avant sortie et que le doigt de blocage 54 s'étend au droit de l'encoche arrière 58, plus précisément en regard de sa face avant inclinée de butée 80.

On note que si, contrairement à ce qui est illustré à la figure 4, le pêne n'est pas en fond d'une rainure 46 mais en appui contre la surface cylindrique externe 48 de l'arbre de direction 50, le fait que la face avant de butée 80 de l'encoche arrière 58 soit inclinée garantit que le doigt de blocage 54 s'étende toujours en regard de cette face avant 80.

Comme on peut le voir aux figures 6 et 7, la séparation partielle de la seconde partie 40 par rapport à la première partie 38 du boîtier 36 de l'antivol 22 provoque bien entendu le recul de la tige de retenue 86 et la libération de la plaquette de blocage 64.

Le doigt de blocage 54 se déplace alors transversalement dans le sens T1 pour pénétrer dans l'encoche arrière 58 jusqu'à ce que son bord transversal intérieur 55 vienne en appui contre la portion en regard de la face avant inclinée de butée 80.

Quel que soit le positionnement longitudinal précis du pêne 20 en position avant sortie par rapport à la première partie 38 du boîtier 36 de l'antivol 22, le doigt de blocage 54 peut pénétrer dans l'encoche arrière de blocage 58 et venir en contact par son bord transversal intérieur 55 avec la face avant inclinée 80.

De plus, on constate que l'action du ressort 72 en association avec l'inclinaison sensiblement à 45° de la face avant inclinée 80 provoque une sollicitation longitudinale du pêne 20 d'arrière en avant.

Grâce à l'invention qui prévoit d'incliner la face avant de butée 80, le principe de "super condamnation" du pêne 20 par le doigt de blocage 54 est garanti quelles que soient les tolérances de fabrication, et quelle que soit la position relative du pêne 20 en position avant sortie, c'est-à-dire qu'il soit ou non en fond de rainure 46, empêchant ainsi toute effraction par un voleur qui tenterait de faire reculer manuellement le pêne après avoir rompu le boîtier 36 en vue de séparer la seconde partie 40 par rapport à la première partie 38.

L'association du doigt de blocage 54 avec la face de butée inclinée 80 constitue donc un dispositif "anti-recul" du pêne 20 en position avant sortie en cas de tentative d'effraction par rupture du boîtier 36.

Dans le deuxième mode de réalisation illustré aux figures 8 à 14, le principe de "super condamnation" du pêne 20 avec une fente arrière de blocage 58 comportant une face avant inclinée 80 est identique à ce qui a été décrit précédemment en référence au premier mode de réalisation illustré aux figures 1 à 8.

Par comparaison avec ce premier mode de réalisation, le second mode de réalisation diffère essentiellement par la conception des moyens de retenue de la plaquette de blocage 64 en position reculée escamotée, qui sont ici constitués par une tige 86 formant levier basculant de blocage.

Le bord transversal intérieur du talon de la plaquette de blocage 64 comporte un plan incliné 91 en regard duquel s'étend normalement le tronçon d'extrémité longitudinale avant 88 de la tige 86 formant levier, cette position normale de retenue de la plaquette de blocage 64 étant illustrée en trait fort à la figure 11.

En cas de séparation totale ou partielle des parties 38 et 40, le tronçon d'extrémité longitudinale avant 88 est susceptible de basculer verticalement vers le bas, comme cela est illustré notamment en traits mixtes à la figure 11, dans une fente 110 prévue à cet effet dans la portion inférieure de la première partie 38 du boîtier 36.

Lorsque le boîtier 36 est intègre, comme on peut le voir notamment aux figures 8 à 10, la tige 86 formant levier basculant est maintenue horizontale. A cet effet, son tronçon d'extrémité longitudinale arrière 94 est retenu par une patte d'immobilisation 106 appartenant à la seconde partie 40 du boîtier 36 et qui s'étend normalement verticalement au dessus du tronçon longitudinal d'extrémité arrière 94.

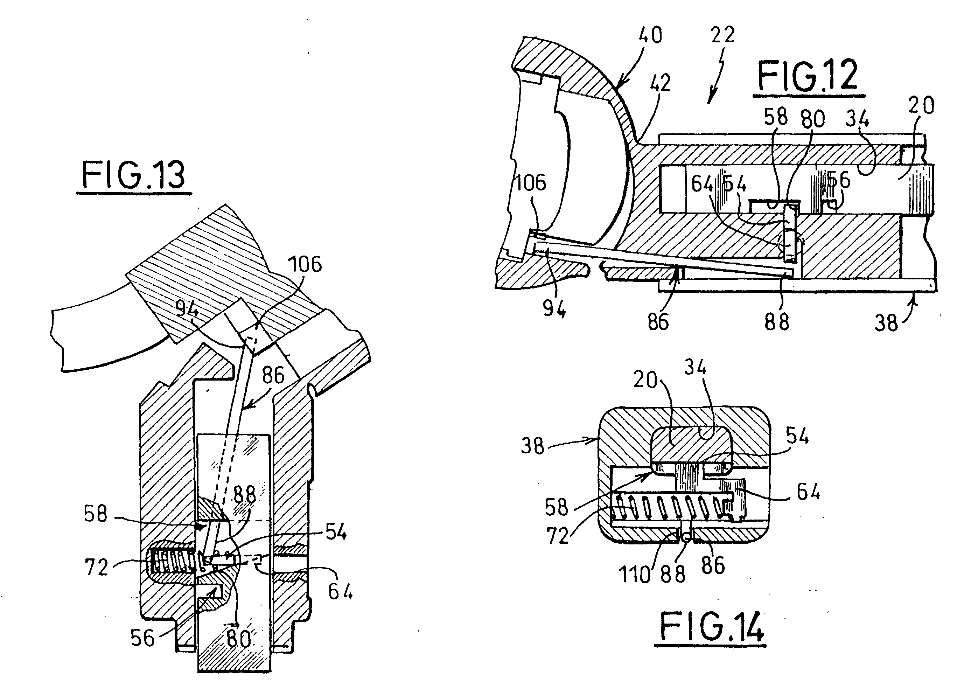

En comparant notamment les figures 8 et 12, on voit que la séparation de la seconde partie 40 par rapport à la première partie 38 s'accompagne d'un mouvement de basculement relatif en rotation dans le sens horaire de cette seconde partie qui éloigne verticalement la patte 106 et qui permet le basculement de la tige formant levier de retenue 86 jusqu'à ce que son tronçon d'extrémité longitudinale avant 88 passe en dessous du plan incliné 91 pour permettre à la plaquette de blocage 64 de venir occuper sa position de retenue dans laquelle le doigt de blocage 54 coopère par son bord transversal intérieur 55 avec la face avant inclinée de butée 80 de l'encoche avant de blocage 58

## Revendications

1. Antivol (22) de colonne de direction,
- du type comportant une première partie (38) dans laquelle un pêne (20) est monté coulissant longitudinalement entre une position avant sortie dans laquelle il est destiné à immobiliser en rotation un arbre (50) de colonne de direction et une position arrière rentrée,
- du type comportant une seconde partie (40) renfermant un élément de commande des déplacements du pêne (20) entre ses positions avant et arrière,
- et du type dans lequel il est prévu des moyens (54, 64) pour immobiliser le pêne lorsque les deux parties (38, 40) de l'antivol sont séparées l'une de l'autre qui comportent un doigt (54) de blocage qui est monté coulissant dans la première partie (38) de l'antivol, qui est sollicité élastiquement (72) vers une position avancée de blocage dans laquelle son extrémité libre (54, 55) est susceptible d'être reçue dans l'une ou l'autre de deux encoches arrière (58) et avant (56) formées dans le pêne (20) pour immobiliser ce dernier dans l'une ou l'autre de ses positions avant sortie ou arrière rentrée respectivement, et qui, tant que les deux parties (38, 40) de l'antivol ne sont pas séparées, est retenu, dans une position reculée escamotée, par un moyen de retenue (86) qui coopère avec la seconde partie (40) de l'antivol, **caractérisé en ce que** l'encoche arrière (58) du pêne (20) est délimitée vers l'avant par une face de butée (80) qui est inclinée d'avant en arrière par rapport à l'axe longitudinal (L) de coulissement du pêne (20) et avec laquelle coopère l'extrémité libre (55) du doigt de blocage (54), lorsque ce dernier est en position avancée de blocage, pour immobiliser longitudinalement le pêne (20) vers l'arrière quelle que soit la position longitudinale du pêne (20) en position avant sortie par rapport à la première partie (38) de l'antivol.

2. Antivol selon la revendication précédente, **caractérisé en ce que** le doigt de blocage (54) est monté coulissant transversalement selon une direction (T) perpendiculaire à la trajectoire longitudinale (L) du pêne (20).

3. Antivol selon l'une quelconque des revendications précédentes, **caractérisé en ce que** les deux parties (38, 40) de l'antivol comportent un boîtier commun réalisé en une seule pièce dans lequel les deux parties sont délimitées l'une de l'autre par une ligne (42) d'amorce de rupture.

4. Antivol selon l'une quelconque des revendications précédentes, **caractérisé en ce que** le moyen de retenue est une tige (86) qui est montée coulissante dans la première partie (38) de l'antivol (22), dont une extrémité (94, 96) coopère avec la seconde partie (40) de l'antivol et dont l'autre extrémité (88) coopère avec le doigt de blocage (54, 64, 92) pour le retenir en position reculée escamotée.

5. Antivol selon l'une quelconque des revendications 1 à 3, **caractérisé en ce que** le moyen de retenue est un levier (86) qui est monté basculant par rapport à la première partie (38) de l'antivol, dont une extrémité (94) coopère avec la seconde partie (40, 106) de l'antivol et dont l'autre extrémité (88) coopère avec le doigt de blocage (54) pour le retenir en position reculée escamotée.

## Claims

1. Antitheft device (22) for a steering column,
- of the type including a first part (38), in which a bolt (20) is mounted so as to slide longitudinally between an extended forward position, in which it is intended to immobilise a steering-column shaft (50) in rotation, and a withdrawn rear position,
- of the type including a second part (40) enclosing an element for controlling the displacements of the bolt (20) between its front and rear positions,
- and of the type in which means (54, 64) for immobilising the bolt when the two parts (38, 40) of the antitheft device are separated from one another are provided, these means including a locking finger (54), which is mounted so as to slide in the first part (38) of the antitheft device, which is loaded elastically (72) towards an advanced locking position, in which its free end (54, 55) is capable of being received in one or the other of two notches, a rear notch (58) and a front notch (56), formed in the bolt (20) so as to immobilise the latter in one or the other of its positions, namely the extended forward position or the withdrawn rear position respectively, and which, as long as the two parts (38, 40) of the antitheft device are not separated, is retained in a withdrawn retracted position by a retention means (86) that co-operates with the second part (40) of the antitheft device, **characterised in that** the rear notch (58) of the bolt (20) is delimited towards the front by a stop face (80) that slopes rearwards relative to the longitudinal axis (L) of sliding of the bolt (20) and with which the free end (55) of the locking finger (54) co-operates when the latter is in an advanced locking position so as to immobilise the bolt (20) longitudinally towards the rear, whatever the longitudinal position of the bolt (20) relative to the first part (38) of the antitheft device in the extended forward position.

2. Antitheft device according to the preceding claim, **characterised in that** the locking finger (54) is mounted so as to slide transversely in a direction (T) perpendicular to the longitudinal path (L) of the bolt (20).

3. Antitheft device according to any of the preceding claims, **characterised in that** the two parts (38, 40) of the antitheft device include a common housing formed in one piece, in which the two parts are delimited with respect to one another by a predetermined breaking line (42).

4. Antitheft device according to any of the preceding claims, **characterised in that** the retention means is a rod (86), which is mounted so as to slide in the first part (38) of the antitheft device (22), one end (94, 96) of which co-operates with the second part (40) of the antitheft device and the other end (88) of which co-operates with the locking finger (54, 64, 92) in order to retain it in a withdrawn retracted position.

5. Antitheft device according to any of Claims 1 to 3, **characterised in that** the retention means is a lever (86), which is mounted so as to tilt relative to the first part (38) of the antitheft device, one end (94) of which co-operates with the second part (40, 106) of the antitheft device and the other end (88) of which co-operates with the locking finger (54) in order to retain it in a withdrawn retracted position.

## Patentansprüche

1. Diebstahlsicherung (22) an einer Lenksäule,
- vom Typ mit einem ersten Teil (38), in dem ein Riegel (20) in Längsrichtung zwischen einer vorderen Austrittsstellung, in der er eine Lenkwelle (50) drehfest festlegen soll, und einer hinteren Eintrittsstellung gleitbeweglich gelagert ist,
- vom Typ mit einem zweiten Teil (40), der ein Steuerelement zum Steuern der Verlagerungen des Riegels (20) zwischen seiner vorderen und seiner hinteren Stellung einschließt,
- und vom Typ, bei dem Mittel (54, 64) vorgesehen sind, um den Riegel festzulegen, wenn die beiden Teile (38, 40) der Diebstahlsicherung voneinander getrennt sind, die einen Sicherungsfinger (54) aufweisen, der im ersten Teil (38) der Diebstahlsicherung gleitbeweglich gelagert ist, der elastisch (72) in eine vorgerückte Sicherungsstellung beaufschlagt wird, in der dessen freies Ende (54, 55) in einer hinteren (58) oder einer vorderen (56) von zwei Aussparungen aufgenommen werden kann, die im Riegel (20) gebildet sind, um diesen letztgenannten in seiner einen, vorderen Austrittstellung bzw. in seiner anderen, hinteren Eintrittsstellung zu sichern, und der durch ein mit dem zweiten Teil (40) der Diebstahlsicherung zusammenwirkendes Haltemittel (86) in einer zurückgefahrenen, eingezogenen Stellung gehalten wird, solange die beiden Teile (38, 40) der Diebstahlsicherung nicht getrennt sind,
**dadurch gekennzeichnet, dass** die hintere Aussparung (58) des Riegels (20) nach vorne durch eine Anschlagfläche (80) begrenzt ist, die bezüglich der Längsachse (L) der Gleitbewegung des Riegels (20) von vorne nach hinten geneigt ist und mit der das freie Ende (55) des Sicherungsfingers (54) zusammenwirkt, wenn dieser letztgenannte sich in vorgerückter Sicherungsstellung befindet, um den Riegel (20) in Längsrichtung nach hinten festzulegen, und zwar unabhängig von der Längsstellung des Riegels (20) bezüglich des ersten Teils (38) der Diebstahlsicherung in der vorderen Austrittsstellung.

2. Diebstahlsicherung nach dem vorangehenden Anspruch, **dadurch gekennzeichnet, dass** der Sicherungsfinger (54) in Querrichtung entlang einer Richtung (T) senkrecht zur Längsbahn (L) des Riegels (20) gleitbeweglich gelagert ist.

3. Diebstahlsicherung nach einem der vorangehenden Ansprüche, **dadurch gekennzeichnet, dass** die beiden Teile (38, 40) der Diebstahlsicherung ein gemeinsames Gehäuse enthalten, das einstückig ausgeführt ist und in dem die beiden Teile durch eine Sollbruchlinie (42) voneinander abgegrenzt sind.

4. Diebstahlsicherung nach einem der vorangehenden Ansprüche, **dadurch gekennzeichnet, dass** das Haltemittel eine Stange (86) ist, die gleitbeweglich im ersten Teil (38) der Diebstahlsicherung (22) gelagert ist und von der das eine Ende (94, 96) mit dem zweiten Teil (40) der Diebstahlesicherung zusammenwirkt und das andere Ende (88) mit dem Sicherungsfinger (54, 64, 92) zusammenwirkt, um diesen in der zurückgefahrenen, eingezogenen Stellung zu halten.

5. Diebstahlsicherung nach einem der Ansprüche 1 bis 3, **dadurch gekennzeichnet, dass** das Haltemittel ein Hebel (86) ist, der gegenüber dem ersten Teil (38) der Diebstahlsicherung schwenkbeweglich gelagert ist und von dem das eine Ende (94) mit dem zweiten Teil (40, 106) der Diebstahlsicherung zusammenwirkt und das andere Ende (88) mit dem Sicherungsfinger (54) zusammenwirkt, um diesen in der zurückgefahrenen, eingezogenen Stellung zu halten.
